Europäisches Patentamt

European Patent Office

Office européen des brevets

(19)

(11) Veröffentlichungsnummer: **0 262 573 B1**

(12) **EUROPÄISCHE PATENTSCHRIFT**

(45) Veröffentlichungstag der Patentschrift:
24.10.90

(51) Int. Cl.⁵: **G01F 1/84**, B06B 1/02

(21) Anmeldenummer: 87113908.5

(22) Anmeldetag: 23.09.87

(54) Massendurchflussmesser.

(30) Priorität: 26.09.86 DE 3632801
11.09.87 DE 8712331 U

(43) Veröffentlichungstag der Anmeldung:
06.04.88 Patentblatt 88/14

(45) Bekanntmachung des Hinweises auf die Patenterteilung:
24.10.90 Patentblatt 90/43

(84) Benannte Vertragsstaaten:
CH DE FR GB IT LI NL

(56) Entgegenhaltungen:
WO-A-81/03250
GB-A- 2 171 200
US-A- 3 826 993
US-A- 4 271 371
US-A- 4 420 983

(73) Patentinhaber: FLOWTEC AG, Kägenstrasse 7,
CH-4153 Reinach BL 1(CH)

(72) Erfinder: Flecken, Peter, Kirchstrasse 8,
D-7858 Well-Haltingen(DE)

(74) Vertreter: Leiser, Gottfried, Dipl.-Ing. et al,
Patentanwälte Prinz, Leiser, Bunke & Partner
Manzingerweg 7, D-8000 München 60(DE)

ACTORUM AG

## Beschreibung

Die Erfindung betrifft einen Corioliskraft-Massendurchflußmesser mit

– einem meßmediumdurchflossenen mechanischen Schwingsystem das durch wenigstens ein gerades Meßrohr gebildet ist, in dessen Mitte ein elektromechanischer Schwingungserreger angeordnet ist, der bei Erregung durch ein elektrisches Erregungssignal eine das Meßrohr in mechanische Biegeschwingungen versetzende Antriebskraft erzeugt, deren Phasenlage mit der Phasenlage des Erregungssignals übereinstimmt,
– zwei zu beiden Seiten des Schwingungserregers in gleichem Abstand von diesem angeordneten, die mechanischen Schwingungen des bzw. jedes Meßrohres in elektrische Sensorsignale umsetzenden Schwingungssensoren,
– einer mit den Schwingungssensoren verbundenen Auswerteschaltung zur Erzeugung eines dem Massendurchfluß entsprechenden Meßsignals aus der Phasendifferenz der Ausgangssignale der Schwingungssensoren und
– einer das Sensorsignal des einen Schwingungssensors aufnehmenden und das Erregungssignal abgebenden Erregungsschaltung.

Ein aus der GB-A 2 171 200 bekannter Corioliskraft-Massendurchflußmesser dieser Art mit zwei Meßrohren enthält magnetisch-induktive Schwingungssensoren, von denen jeder einen an einem Meßrohr befestigten Permanentmagneten und eine am anderen Meßrohr befestigte Induktionsspule enthält. Es handelt sich hierbei also um Geschwindigkeitssensoren, da das von jedem Schwingungssensor gelieferte Sensorsignal von der Geschwindigkeit der Schwingbewegung der Meßrohre abhängt und im wesentlichen mit dieser Geschwindigkeit in Phase ist. Die Erregungsschaltung enthält für die Erregung der Grundschwingung der mechanischen Biegeschwingungen der Meßrohre einen Verstärker, der am Eingang das Sensorsignal des einen Schwingungssensors empfängt und dessen Ausgangssignal das Erregungssignal darstellt, das dem Schwingungserreger zugeführt wird. Somit liegen der Schwingungserreger, das mechanische Schwingsystem und der Schwingungssensor im Rückkopplungskreis des Verstärkers, wodurch eine Selbsterregung der mechanischen Biegeschwingungen bei der Grundschwingungs-Resonanzfrequenz stattfindet. Dies ist möglich, weil das von einem Geschwindigkeitssensor gelieferte Sensorsignal die richtige Phasenlage für die Erfüllung der Selbsterregungsbedingung eines rückgekoppelten Verstärkers hat. Die Erregungsschaltung dieses bekannten Corioliskraft-Massendurchflußmessers enthält außerdem einen zweiten Selbsterregungskreis mit einem Verstärker, in dessen Rückkopplungskreis ebenfalls der Schwingungserreger, das mechanische Schwingsystem und der Schwingungssensor liegen, doch enthält dieser zweite Selbsterregungskreis ein auf eine Oberschwingungsfrequenz abgestimmtes Selektionsfilter, wodurch zusätzlich die Selbsterregung einer ausgeprägten Oberschwingung erzielt wird, die der Grundschwingung überlagert ist und zur Erzeugung eines Korrektursignals herangezogen wird. Das Selektionsfilter kann nach Art eines "tracking filter" mit Hilfe eines Phasenregelkreises sehr genau auf die Oberschwingungsfrequenz abgestimmt werden.

Ein Corioliskraft-Massendurchflußmesser dieser Art bildet ein hochempfindliches Meßgerät, dessen vom Meßmedium durchflossene Meßrohre ein mechanisches Schwingsystem hoher Güte mit sehr schmalbandiger Resonanzkurve bilden. Die Messung des Massendurchflusses beruht darauf, daß die Meßrohre in Biegeschwingungen quer zur Strömungsrichtung versetzt und die durch die Corioliskraft verursachten Phasenverschiebungen zwischen den mechanischen Biegeschwingungen an den beiden Enden des Meßrohres ermittelt werden. Da diese Phasenverschiebungen sehr klein sind, kann die Meßgenauigkeit durch die Verwendung von Schwingungssensoren großer Masse oder von Schwingungssensoren, die ihrerseits Reaktionskräfte erzeugen, beeinträchtigt werden.

Bei dem aus der GB-A 2 171 200 bekannten Corioliskraft-Massendurchflußmesser ist zur genaueren Einhaltung der Resonanzbedingung in jedem der beiden Selbsterregungskreise eine Phasenkorrekturschaltung vorgesehen, doch ist diese Lösung unvollkommen, da die Phasenkorrekturschaltung nur eine vorgegebene Phasenkorrektur vornimmt und betriebsbedingte Schwankungen der Phasenlage nicht ausgleichen kann. Ferner bleiben ungeachtet der Phasenkorrekturschaltung die Probleme bestehen, die sich aus der Verwendung von als Geschwindigkeitssensoren ausgebildeten Schwingungssensoren in Form von magnetisch-induktiven Wandlern ergeben, die aufgrund ihrer Permanentmagnete und Induktionsspulen eine erhebliche Masse aufweisen und aufwendige Befestigungsmittel und Kabelanordnungen am Schwingsystem erfordern.

Aus der US-A 4 420 983 ist andererseits ein Massendurchflußmesser bekannt, der ein mechanisches Schwingsystem aufweist, dessen mechanische Schwingungen mit Hilfe einer Erregungsschaltung erzeugt werden, die einen Phasenkomparator und einen durch das Ausgangssignal des Phasenkomparators frequenz- und phasensteuerbaren Oszillator enthält. Dieser bekannte Massendurchflußmesser arbeitet jedoch nicht nach dem Coriolis-Prinzip, und er weist demgemäß keine vom Meßmedium durchflossenen Meßrohre auf, die in Biegeschwingungen versetzt werden, damit die durch die Corioliskraft verursachten Phasenverschiebungen der Biegeschwingungen als Maß für den Massendurchfluß ermittelt werden können; vielmehr ist das mechanische Schwingsystem durch einen vom Meßmedium umströmten Schwingkörper gebildet, in welchem eine Biegeschwingungswelle erzeugt wird, deren Fortpflanzungsrichtung mit der Richtung der Geschwindigkeit oder zumindest einer Komponente der Geschwindigkeit des Meßmediums übereinstimmt, und als Maß für den Massendurchfluß wird die von der Dichte und Geschwindigkeit des Meßmediums abhängige Fortpflanzungsgeschwindigkeit der Biegeschwingungswelle ermittelt. Der Schwingkörper ist entweder ein Hohlzylinder, in dessen Wand eine sich in der Umfangsrichtung ausbreitende Biegeschwingungswelle erzeugt wird, oder eine längliche Platte, in der sich die Biegeschwingungswelle in der Längsrichtung ausbreitet.

Aufgabe der Erfindung ist demgegenüber die Schaffung eines Corioliskraft-Massendurchflußmessers der eingangs angegebenen Art, dessen mechanisches Schwingsystem mit verhältnismäßig geringer Erregungsleistung sehr genau unter Einhaltung der Resonanzbedingungen zu Eigenresonanzschwingungen angeregt werden kann, ohne daß die Schwingungseigenschaften des Schwingsystems beeinträchtigt werden.

Nach der Erfindung wird diese Aufgabe durch die folgenden Merkmale gelöst:

– jeder Schwingungssensor ist ein Wegsensor, der einen Lichtsender, einen Lichtempfänger sowie eine das Licht des Lichtsenders zum Lichtempfänger übertragende Lichtleitereinrichtung enthält, die so ausgebildet ist, daß der übertragene Lichtstrom durch die Auslenkung des mechanischen Schwingsystems beeinflußbar ist, so daß die Phasenlage des Sensorsignals mit der Phasenlage der Auslenkung des mechanischen Schwingsystems übereinstimmt,
– die Erregungsschaltung enthält einen Phasenregelkreis mit einem Phasenkomparator und mit einer durch das Ausgangssignal des Phasenkomparators frequenz- und phasensteuerbaren Oszillatorschaltung sowie eine Phasenschieberschaltung, die eine Phasenverschiebung von 90° zwischen dem am Eingang der Erregungsschaltung empfangenen Sensorsignal und dem am Ausgang der Erregungsschaltung abgegebenen Erregungssignal erzwingt,
– der Phasenkomparator empfängt am ersten Eingang ein in definierter Phasenbeziehung zum Sensorsignal stehendes Signal und am zweiten Eingang das Ausgangssignal der Oszillatorschaltung,
– der Phasenregelkreis erzwingt eine phasenstarre Synchronisation zwischen den beiden Eingangssignalen des Phasenkomparators und
– das Erregungssignal ist aus dem Ausgangssignal der Oszillatorschaltung abgeleitet.

Bei dem Corioliskraft-Massendurchflußmesser nach der Erfindung wird die Auslenkung des Schwingsystems unmittelbar durch einen Wegsensor erfaßt, der so ausgebildet ist, daß sein Einfluß auf die Schwingungsdynamik vernachlässigbar ist, und die Schwingungen des mechanischen Schwingsystems werden durch den Phasenregelkreis mit hoher Genauigkeit und Stabilität auf der Eigenresonanzfrequenz gehalten. Da das von dem Wegsensor gelieferte Wegsignal gegenüber der Antriebskraft eine Phasenverschiebung von 90° aufweist, wird die für die Erfüllung der Resonanzbedingung erforderliche Phasenlage durch die zusätzlich vorgesehene Phasenschieberschaltung hergestellt. Durch diese Maßnahmen ist eine hohe Empfindlichkeit und große Meßgenauigkeit gewährleistet, und die Schwingungserregung kann trotz der hohen Güte und der schmalbandigen Resonanzkurve des mechanischen Schwingsystems mit geringer Erregungsleistung erfolgen. Dies ermöglicht insbesondere auch den Einsatz des Corioliskraft-Massendurchflußmessers in explosionsgefährdeten Bereichen.

Vorteilhafte Ausgestaltungen und Weiterbildungen des Corioliskraft-Massendurchflußmessers nach der Erfindung sind in den Unteransprüchen gekennzeichnet.

Ein Ausführungsbeispiel der Erfindung ist in der Zeichnung dargestellt. In der Zeichnung zeigt:

Fig. 1 eine schematische Darstellung eines Corioliskraft-Massendurchflußmessers nach der Erfindung,

Fig. 2 die Amplituden- und Phasenkennlinien eines mechanischen Schwingsystems hoher Güte,

Fig. 3 das Blockschaltbild der Erregungsschaltung des Corioliskraft-Massendurchflußmessers von Fig. 1

Fig. 4 den zeitlichen Verlauf verschiedener Signale, die in der Erregungsschaltung von Fig. 3 auftreten,

Fig. 5 eine schematische Darstellung eines optischen Wegsensors und

Fig. 6 den Einbau des optischen Wegsensors von Fig. 5 in den Corioliskraft-Massendurchflußmesser von Fig. 1.

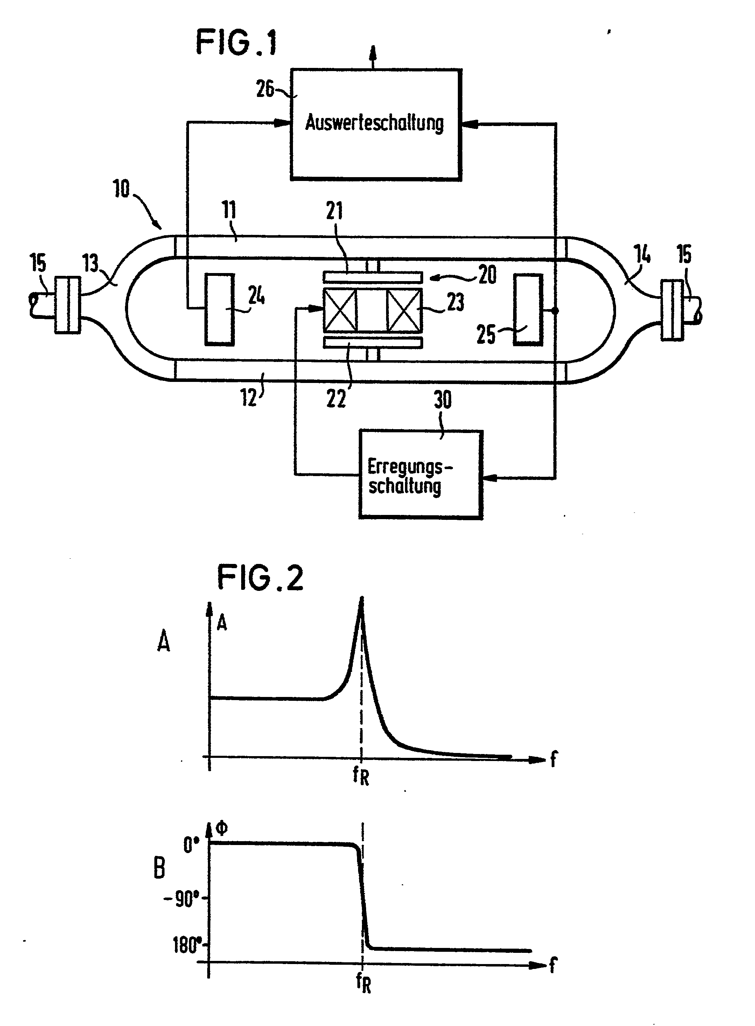

Figur 1 zeigt einen Corioliskraft-Massendurchflußmesser 10 mit zwei parallelen geraden Meßrohren 11 und 12. Die Meßrohre sind an beiden Enden durch Verteilerstücke 13, 14 in eine Rohrleitung 15 eingefügt, durch die das Meßmedium strömt, dessen Massendurchfluß gemessen werden soll. Somit werden die beiden Meßrohre 11, 12 von dem Meßmedium parallel durchströmt.

In der Mitte der beiden Meßrohre 11 und 12 ist ein Schwingungserreger 20 angeordnet, der die beiden Meßrohre 11, 12 in gegensinnige Biegeschwingungen versetzen kann, deren Schwingungsebene in der gemeinsamen Ebene der beiden Meßrohre, also in der Zeichenebene von Figur 1, liegt. Der Schwingungserreger kann ein beliebiger elektromechanischer Wandler sein, der bei Zuführung eines elektrischen Erregungssignals eine auf die Meßrohre einwirkende Antriebskraft erzeugt. Je nach der Art des elektromechanischen Wandlers kann das Erregungssignal eine elektrische Wechselspannung oder ein elektrischer Wechselstrom sein. Bei dem dargestellten Beispiel ist angenommen, daß es sich um einen elektromagnetischen Wandler handelt. An den beiden Meßrohren 11, 12 sind in deren Mitte Permanentmagnete 21, 22 befestigt, und zwischen den Permanentmagneten 21, 22 liegt eine feststehende Magnetspule 23. Die Permanentmagnete 21, 22 sind so gepolt, daß sie gleichzeitig angezogen bzw. abgestoßen werden, wenn durch die Magnetspule 23 ein Strom in der einen oder in der anderen Richtung geschickt wird. Wenn somit durch die Magnetspule 23 ein elektrischer Wechselstrom geschickt wird, werden die Meßrohre 11, 12 in gegensinnige Biegeschwingungen mit der Frequenz des Wechselstrom versetzt. Die Antriebskraft, die das mechanische Schwingsystem in Schwingungen versetzt, ist in diesem Fall durch die Anziehungs- und Abstoßungskräft zwischen den Permanentmagneten 21, 22 und der Magnetspule 23 gebildet.

Die Messung des Massendurchflusses beruht bei einem solchen Massendurchflußmesser darauf, daß das durch die schwingenden Meßrohre strömende Meßmedium Corioliskräfte erzeugt, die eine gegenseitige Phasenverschiebung der mechanischen Schwingungen an den beiden Enden jedes Meßrohres zur Folge haben. Die Größe dieser Phasenverschiebung ist ein Maß für den Massendurchfluß. Zur Messung der Phasenverschiebung sind zu beiden Seiten des Schwingungserregers 20 und in gleichem Abstand von diesem Schwingungssensoren 24, 25 angebracht. Die Schwingungssensoren liefern elektrische Sensorsignale, die für die Phasenlage der von ihnen abgetasteten Schwingungen kennzeichnend sind. Diese Sensorsignale werden einer Auswerteschaltung 26 zugeführt, die daraus den Massendurchfluß ermittelt.

Damit eine ausreichende Schwingungsamplitude der Meßrohre 11, 12 mit möglichst geringer Antriebsleistung erzielt wird, erfolgt die Schwingungserregung möglichst genau bei der Eigenresonanzfrequenz des von den Meßrohren 11, 12 gebildeten mechanischen Schwingsystems. Zu diesem Zweck wird das Ausgangssignal des Schwingungssensors 25 einer Erregungsschaltung 30 zugeführt, die zu dem Schwingungserreger 20 ein elektrisches Erregungssignal schickt, das die gleiche Frequenz wie das Sensorsignal hat und dessen Amplitude für die Aufrechterhaltung der mechanischen Schwingungen ausreicht. Der von der Erregungsschaltung 30 angesteuerte Schwingungserreger regt die Meßrohre 11, 12 zu mechanischen Biegeschwingungen mit der Eigenresonanzfrequenz des von ihnen gebildeten mechanischen Schwingsystems an. Bei dem dargestellten Ausführungsbeispiel, bei welchem der Schwingungserreger ein elektromagnetischer Wandler ist, ist das Erregungssignal ein Wechselstrom. Bei anderen Arten von Schwingungserregern kann das Erregungssignal auch eine Wechselspannung sein.

Zum besseren Verständnis der Resonanzbedingungen zeigen die Diagramme A und B von Figur 2 die Amplituden- und Phasenkennlinien eines Schwingsystems hoher Güte, wie es der in Figur 1 gezeigte Corioliskraft-Massendurchflußmesser mit gegensinnig schwingenden geraden parallelen Meßrohren darstellt. Das Diagramm A zeigt die Amplitude der mechanischen Schwingungen als Funktion der Erregungsfrequenz f bei konstanter Amplitude des Erregungswechselstroms. Bei Frequenzen unterhalb der Eigenresonanzfrequenz $f_R$ ist die Amplitude nahezu konstant und verhältnismäßig klein. Erst bei Frequenzen, die nur wenig unterhalb der Eisenresonanzfrequenz $f_R$ liegen, wird die Amplitude größer, und sie steigt bei Annäherung an die Eigenresonanzfrequenz $f_R$ sehr steil an. Die Amplitudenkurve hat bei der Eigenresonanzfrequenz $f_R$ ein spitzes Maximum und fällt bei höheren Frequenzen wieder sehr schnell auf einen verhältnismäßig kleinen Wert ab.

Das Diagramm B von Figur 2 zeigt die entsprechende Kennlinie der Phasenverschiebung φ der Schwingungsbewegung des mechanischen Schwingsystems gegen die Phasenlage der Antriebskraft, die im Fall des elektromagnetischen Schwingungserregers von Figur 1 mit der Phasenlage des Erregungswechselstroms übereinstimmt. Bei Frequenzen weit unterhalb der Eigenresonanzfrequenz $f_R$ folgt das mechanische Schwingsystem praktisch verzögerungsfrei der Antriebskraft; zwischen der Antriebskraft und der Schwingbewegung besteht die Phasenverschiebung φ = 0°. Erst bei Frequenzen, die nur wenig unterhalb der Eigenresonanzfrequenz $f_R$ liegen, beginnt die Schwingbewegung gegen die erregende Kraft nachzueilen, und bei der Eigenresonanzfrequenz $f_R$ beträgt die Phasenverschiebung φ = 90°, wobei das Minuszeichen die Phasennacheilung der Schwingbewegung bedeutet. Bei weiter ansteigender Erregungsfrequenz f nimmt die Phasennacheilung schnell weiter zu, und sie erreicht bei einer Frequenz, die nur wenig oberhalb der Eigenresonanzfrequenz $f_R$ liegt, den Wert φ = -180°, den sie bei noch höheren Erregungsfrequenzen beibehält.

Das Diagramm A von Fig. 2 läßt erkennen, daß bei einem mechanischen Schwingsystem hoher Güte bereits eine verhältnismäßig geringfügige Abweichung von der Eigenresonanfrequenz $f_R$ zur Folge hat, daß die Schwingungsamplitude beträchtlich kleiner wird. Zur Erzeugung einer ausreichenden Schwingungsamplitude, wie sie für die Massendurchflußmessung nach dem Coriolis-Prinzip erforderlich ist, muß dann der Erregungswechselstrom entsprechend vergrößert werden. Dies bedeutet einen größeren Leistungsaufwand, der in vielen Fällen unerwünscht ist, insbesondere beim Einsatz der Meßgeräte in explosionsgefährdeten Bereichen, da dort zulässige Höchstwerte für elektrische Ströme und Spannungen vorgeschrieben sind, die nicht überschritten werden dürfen.

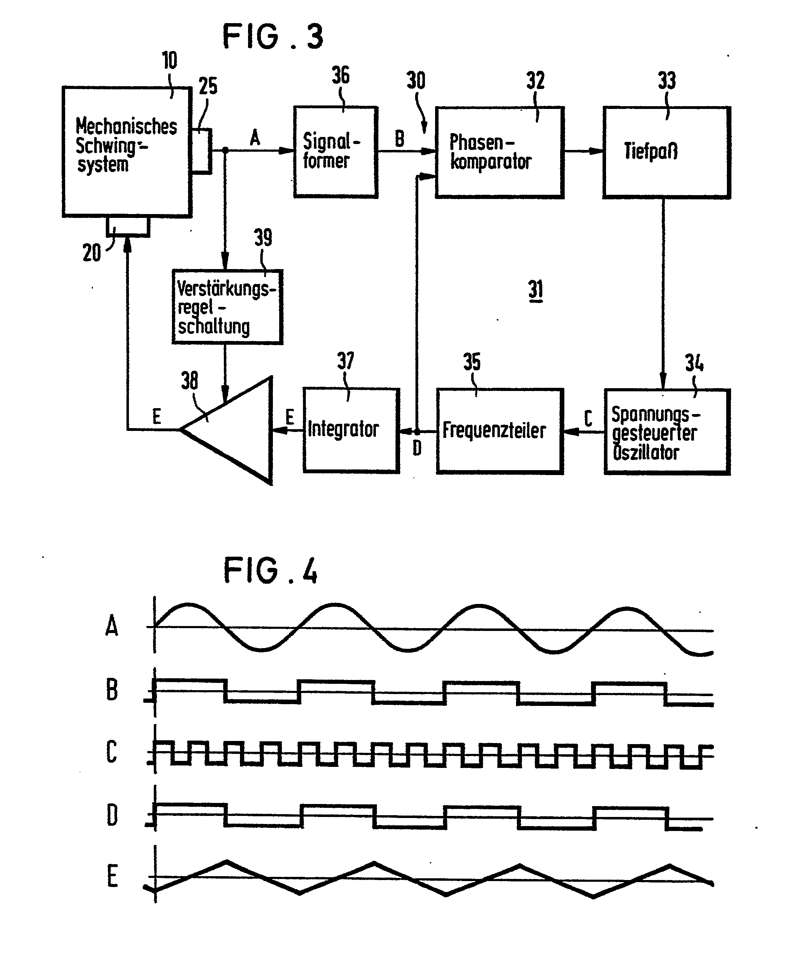

Figur 3 zeigt eine Ausbildung der Erregungsschaltung 30, die eine Selbsterregung der mechanischen Schwingungen mit einer Frequenz ergibt, die mit großer Genauigkeit der Eigenresonanzfrequenz des mechanischen Schwingsystems entspricht. In Figur 3 ist das mechanische Schwingsystem 10 mit dem Schwingungserreger 20 und dem Schwingungssensor 25 vereinfacht durch einen Block dargestellt

Die Erregungsschaltung 30 enthält als wesentlichen Bestandteil einen Phasenregelkreis 31 mit einem Phasenkomparator 32, einem Tiefpaß 33, einem spannungsgesteuerten Oszillator 34 und einem Frequenzteiler 35. Das vom Schwingungssensor 25 gelieferte Sensorsignal wird dem einen Eingang des Phasenkomparators 32 über einen Signalformer 36 zugeführt. Der Phasenkomparator 32 empfängt am anderen Eingang das Ausgangssignal des Frequenzteilers 35 und gibt am Ausgang eine Spannung ab, die von der Phasendifferenz zwischen seinen Eingangssignalen abhängt. Diese Spannung wird nach Glättung im Tiefpaß 33 an den Steuereingang des spannungsgesteuerten Oszillators 34 angelegt. Bekanntlich erzeugt ein spannungsgesteuerter Oszillator, auch "VCO" ("Voltage Controlled Oscillator") genannt, am Ausgang ein elektrisches Wechselsignal, dessen Frequenz von der an den Steuereingang angelegten Spannung abhängt. Die Frequenz des Ausgangssignals des spannungsgesteuerten Oszillators 34 ist ein Vielfaches der Frequenz des Sensorsignals und wird in dem Frequenzteiler 35 auf die Frequenz des Sensorsignals herabgesetzt. Ein derartiger Phasenregelkreis, der auch unter der Bezeichnung "PLL" (Phase-Locked Loop") bekannt ist, hält eine phasenstarre Beziehung zwischen den beiden an den Eingang des Phasenkomparators 32 angelegten Signalen aufrecht.

Das Ausgangssignal des Frequenzteilers 35 wird außerdem an einen Integrator 37 angelegt, dessen Ausgangssignal einem Verstärker 38 zugeführt wird. An den Ausgang des Verstärkers 38 ist der Schwingungserreger 20 angeschlossen. Der Verstärker 38 ist mit steuerbarer Verstärkung ausgebildet. Eine Verstärkungsregelschaltung 39, die das Sensorsignal empfängt, liefert eine Verstärkungsregelspannung zum Verstärkungssteuereingang des Verstärkers 38.

Die Diagramme A bis E von Figur 4 zeigen den zeitlichen Verlauf der Signale, die an den mit den gleichen Buchstaben bezeichneten Schaltungspunkten von Figur 3 auftreten. Anhand dieser Diagramme läßt sich die Funktion der Erregungsschaltung von Figur 3 erläutern.

Das Diagramm A zeigt das vom Schwingungssensor 25 gelieferte Sensorsignal. Dieses Signal ist eine sinusförmige Spannung, das in Frequenz und Phasenlage mit der Bewegung des mechanischen Schwingsystems, also mit der Auslenkung der Meßrohre 11 und 12 übereinstimmt. Es handelt sich also um ein "Wegsignal".

Das Sensorsignal A wird im Signalformer 36 in ein symmetrisches Rechtecksignal B umgeformt, das mit dem Sensorsignal A phasengleich ist.

Das Diagramm C zeigt das Ausgangssignal des spannungsgesteuerten Oszillators 34. Es wird angenommen, daß der spannungsgesteuerte Oszillator 34 ein Rechtecksignalgenerator ist. Das Signal C ist daher eine Rechteckspannung, deren Frequenz ein ganzzahliges Vielfaches der Frequenz des Rechtecksignals B ist.

Der Frequenzteiler 35 liefert am Ausgang ein Rechtecksignal D, das die gleiche Frequenz wie das Rechtecksignal B hat und infolge der vom Phasenregelkreis 31 bewirkten phasenstarren Synchronisation exakt die gleiche Phasenlage wie das Rechtecksignal B hat. Somit ist das Rechtecksignal D auch mit dem Sensorsignal A phasengleich.

Im Integrator 37 entsteht durch die fortlaufende Integration des Rechtecksignals D eine Dreieckspannung E, die die gleiche Frequenz wie das Rechtecksignal D hat. Die Extremwerte des Dreiecksignals E liegen aber bei den Nulldurchgängen des Rechtecksignals D. Die Dreieckspannung E hat also infolge der Integration gegenüber der Rechteckspannung D eine Phasenverschiebung von 90°.

Der vom Verstärker 38 zum Schwingungserreger 20 gelieferte Wechselstrom entspricht nach Kurvenform, Frequenz und Phasenlage genau der Dreieckspannung E. Somit wird die Magnetspule 23 des Schwingungserregers 20 durch einen Wechselstrom erregt, der eine Phasenverschiebung von 90° gegen das vom Schwingungssensor 25 gelieferte Sensorsignal A hat. Da einerseits die von der Magnetspule 23 erzeugte Antriebskraft mit dem Erregungswechselstrom phasengleich ist und andererseits das Sensorsignal mit der vom Schwingungssensor 25 abgetasteten Auslenkung der Meßrohre 11, 12 phasengleich ist, ist genau die Phasenbedingung für Eigenresonanz erfüllt, die sich aus dem Diagramm B von Figur 2 ergibt: Die Antriebskraft hat eine Phasenverschiebung von 90° gegenüber der Auslenkung der mechanischen Schwingung.

Der Integrator 37 erfüllt zwei Funktionen: Einerseits bildet er aus dem Rechtecksignal D ein Dreiecksignal, dessen Kurvenform für die Erregung der Magnetspule 23 günstiger ist; andererseits wirkt er als Phasenschieber, der eine feste Phasenverschiebung von 90° zwischen dem Sensorsignal A und dem Ausgangssignal des Phasenregelkreises 31 einführt. In Verbindung mit der phasenstarren Synchronisation durch den Phasenregelkreis wird auf diese Weise die erforderliche Phasenbeziehung zwischen dem Sensorsignal A und dem Erregungssignal E erhalten, die für die Erfüllung der Phasenbedingung notwendig ist.

Anstatt den 90°-Phasenschieber dem Ausgang des Frequenzteilers 35 nachzuschalten, um dem Erregungssignal E eine Phasenverschiebung von 90° gegenüber dem Frequenzteiler-Ausgangssignal D zu erteilen, wäre es auch möglich, ihn zwischen dem Wegsensor 25 und dem Phasenkomparator 32 anzuordnen, so daß dem Signal B, das dem Phasenregelkreis 31 zugeführt wird, eine Phasenverschiebung von 90° gegenüber dem Wegsignal A erteilt wird. In diesem Fall müßte natürlich das Erregungssignal E mit dem Frequenzteiler-Ausgangssignal D in Phase sein. Die in Fig. 3 dargestellte Ausbildung des 90°-Phasenschiebers in Form des dem Phasenregelkreis 31 nachgeschalteten Integrators 37 ergibt jedoch den Vorteil, daß die beiden Funktionen der Phasenverschiebung und der Signalformung im Integrator 37 vereinigt sind.

Durch die Verstärkungsregelschaltung 39 wird die Amplitude des dem Schwingungserreger 20 zugeführten Erregungswechselstroms so geregelt, daß eine vorgegebene konstante Amplitude des Sensorsignals A und somit auch eine vorgegebene kontante Schwingungsamplitude der mechanischen Schwingungen aufrechterhalten wird.

Es ist auch möglich, anstelle der Permanentmagnete 21, 22 von Figur 1 Weicheisen-Anker zu verwenden. Allerdings darf dann der Dreieckstrom nicht mehr, wie im Diagramm E von Figur 4, nullsymmetrisch sein, denn dann würden die Weicheisen-Anker sowohl in den positiven als auch in den negativen Halbperioden angezogen werden, was eine Schwingungserregung mit der doppelten Frequenz zur Folge hätte. Wenn sich jedoch der Dreieckstrom nur nach einer Richtung von der Nulllinie ändert, erfolgt die Erregung der mechanischen Schwingungen wieder mit der Frequenz des Dreieckstroms.

Wie erwähnt, verursacht der Massendurchfluß eine Phasenverschiebung der mechanischen Schwingungen zwischen dem Ort des Schwingungserregers 20 und den Stellen, an denen die Schwingungssensoren 24 und 25 angeordnet sind. Da als Sensorsignal für die Erregungsschaltung 30 das Ausgangssignal des Schwingungssensors 25 verwendet wird, weist dieses Sensorsignal eine zusätzliche Phasenverschiebung auf, die vom Massendurchfluß abhängt. Diese Phasenverschiebung ist jedoch äußerst gering, so daß sie für die Erfüllung der Phasenbedingung bei Resonanz unberücksichtigt bleiben kann. Wenn man jedoch selbst diese geringfügige Phasenverschiebung ausschalten will, ist es ohne weiteres möglich, einen zusätzlichen Schwingungssensor unmittelbar am Ort des Schwingungserregers 20 anzubringen und das von diesem Schwingungssensor erzeugte Sensorsignal der Erregungsschaltung 30 zuzuführen.

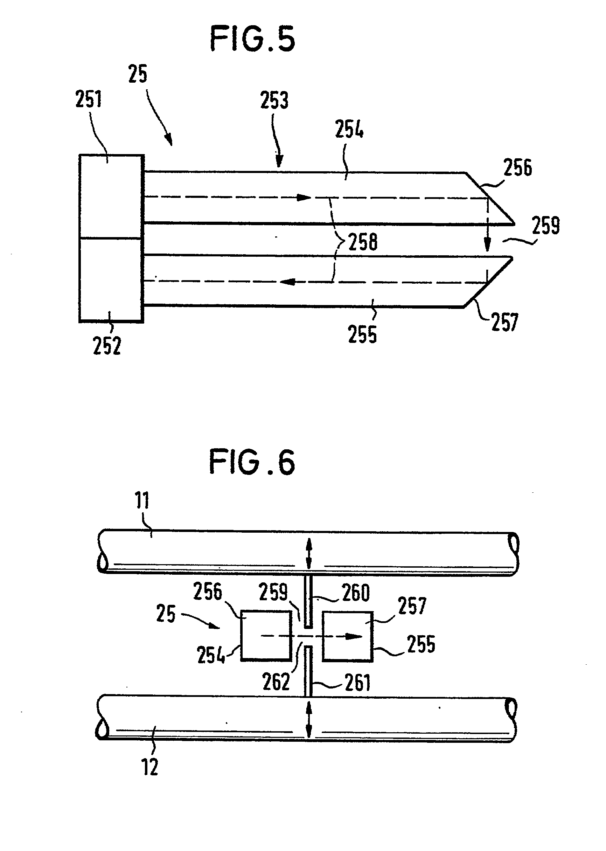

Der in Fig. 1 nur schematisch dargestellte, als Wegsensor ausgebildete Schwingungssensor 25 besteht gemäß Fig. 5 im wesentlichen aus einem Lichtsender 251, einem Lichtempfänger 252 und einer Lichtleitereinrichtung 253, die das Licht des Lichtsenders 251 zum Lichtempfänger 252 so überträgt, daß der übertragene Lichtstrom durch die Schwingungen der Meßrohre 11, 12 beeinflußt werden kann.

Als Lichtsender 251 kann eine Luminiszenzdiode verwendet werden. Der Lichtempfänger 252 ist ein photoelektrischer Wandler, der das empfangene Licht in ein elektrisches Signal umsetzt, das als Sensorsignal darstellt. Beispielsweise kann dafür eine PIN-Diode im Infrarotbereich (z.B. bei einer Wellenlänge von 880 nm) verwendet werden. Die Lichtleitereinrichtung 253 ist aus zwei in geringem Abstand parallel angeordneten Saphirstäben 254 und 255 gebildet, die am einen Ende mit dem Lichtsender 251 bzw. dem Lichtempfänger 252 verbunden sind, während die freien anderen Enden im Winkel von 45° abgeschrägt sind, so daß die dadurch gebildeten schrägen Stirnflächen 256 bzw. 257 im rechten Winkel zueinander stehen. Der durch diese Ausbildung erzielte Strahlengang des vom Lichtsender 251 emittierten Lichtstroms ist in Fig. 5 durch die gestrichelte Linie 258 dargestellt. Im Saphirstab 254 breitet sich das Licht axial aus, bis es auf die schräge Stirnfläche 256 trifft, wo es im Winkel von 90° totalreflektiert wird. Es geht durch den zwischen den beiden Saphirstäben 253 und 254 bestehenden Luftspalt 259 und trifft auf die 255 schräge Stirnfläche 257 des Saphirstabs 255, wo es erneut im Winkel von 90° totalreflektiert wird, so daß es sich im Saphirstab 255 axial ausbreitet und auf den Lichtempfänger 252 trifft. Die beiden schrägen Stirnflächen 256 und 257 lenken somit zusammen das Licht nach Art eines rechtwinkligen Prismas um 180° um.

Gemäß Fig. 6 wird die Anordnung von Fig. 5 zur Bildung eines Wegsensors in den Corioliskraft-Massendurchflußmesser von Fig. 1 so eingebaut, daß sich die Saphirstäbe 254, 255 senkrecht zu den Längsachsen der Meßrohre 11, 12 erstrecken und ihre schrägen Stirnflächen 256, 257 zwischen den Meßrohren liegen. An jedem Meßrohr ist eine Tauchfahne 260 bzw. 261 senkrecht zur Meßrohrachse so befestigt, daß sie in den Luftspalt 259 zwischen den Saphirstäben 254 und 255 ragt. Die beiden Tauchfahnen 260, 261 liegen in einer Ebene, und ihre einander zugewandten Kanten liegen im Abstand voneinander, so daß ein Spalt 262 besteht, durch den ein Teil des an der Stirnfläche 256 reflektierten Lichtstroms vom Saphirstab 254 zum Saphirstab 255 gehen kann. Wenn die beiden Meßrohre 11, 12 gegensinnig schwingen, wird der Spalt 262 zwischen den Tauchfahnen 260 und 261 im Takt der Schwingungen abwechselnd breiter und schmäler, wodurch der vom Saphirstab 254 zum Saphirstab 255 gehende Lichtstrom moduliert wird. Dabei entsprechen die Amplituden des modulierten Lichtstroms und demzufolge auch die Amplituden des vom Lichtempfänger 252 abgegebenen Sensorsignals den Schwingungsamplituden der Meßrohre 11, 12.

Die Verstärkungsregelschaltung 39 von Fig. 3 dient unter anderem dazu, die Schwingungsamplituden der Meßrohre 11 und 12 so zu begrenzen, daß ein Zusammenstoßen der beiden Tauchfahnen 260 und 261 verhindert wird, wodurch die Betriebssicherheit und die Zuverlässigkeit erhöht werden.

## Patentansprüche

1. Corioliskraft-Massendurchflußmesser mit
- einem meßmediumdurchflossenen mechanischen Schwingsystem (11, 12), das durch wenigstens ein gerades Meßrohr (11, 12) gebildet ist, in dessen Mitte ein elektromechanischer Schwingungserreger (20) angeordnet ist, der bei Erregung durch ein elektrisches Erregungssignal (E) eine das Meßrohr (11, 12) in mechanische Biegeschwingungen versetzende Antriebskraft erzeugt, deren Phasenlage mit der Phasenlage des Erregungssignals übereinstimmt,
- zwei zu beiden Seiten des Schwingungserregers (20) in gleichem Abstand von diesem angeordneten, die mechanischen Schwingungen des bzw. jedes Meßrohres in elektrische Sensorsignale umsetzenden Schwingungssensoren (24, 25),
- einer mit den Schwingungssensoren (24, 25) verbundenen Auswerteschaltung (26) zur Erzeugung eines dem Massendurchfluß entsprechenden Meßsignals aus der Phasendifferenz der Ausgangssignale der Schwingungssensoren (24, 25) und
- einer das Sensorsignal (A) des einen Schwingungssensors (25) aufnehmenden und das Erregungssignal (E) abgebenden Erregungsschaltung (30),
gekennzeichnet durch folgende Merkmale:
- jeder Schwingungssensor (25) ist ein Wegsensor, der einen Lichtsender (251), einen Lichtempfänger (252) sowie eine das Licht des Lichtsenders (251) zum Lichtempfänger (252) übertragende Lichtleitereinrichtung (253) enthält, die so ausgebildet ist, daß der übertragene Lichtstrom durch die Auslenkung des mechanischen Schwingsystems beeinflußbar ist, so daß die Phasenlage des Sensorsignals (A) mit der Phasenlage der Auslenkung des mechanischen Schwingsystems (11, 12) übereinstimmt,

– die Erregungsschaltung (30) enthält einen Phasenregelkreis (31) mit einem Phasenkomparator (32) und mit einer durch das Ausgangssignal des Phasenkomparators (32) frequenz- und phasensteuerbaren Oszillatorschaltung (34, 35) sowie eine Phasenschieberschaltung (37), die eine Phasenverschiebung von 90° zwischen dem am Eingang der Erregungsschaltung (30) empfangenen Sensorsignal (A) und dem am Ausgang der Erregungsschaltung (30) abgegebenen Erregungssignal (E) erzwingt,

– der Phasenkomparator (32) empfängt am ersten Eingang ein in definierter Phasenbeziehung zum Sensorsignal (A) stehendes Signal (B) und am zweiten Eingang das Ausgangssignal (D) der Oszillatorschaltung (34, 35),

– der Phasenregelkreis (31) erzwingt eine phasenstarre Synchronisation zwischen den beiden Eingangssignalen des Phasenkomparators (32) und

– das Erregungssignal (E) ist aus dem Ausgangssignal (D) der Oszillatorschaltung (34, 35) abgeleitet.

2. Corioliskraft-Massendurchflußmesser nach Anspruch 1, dadurch gekennzeichnet, daß die Phasenschieberschaltung (37) dem dem ersten Eingang des Phasenkomparators (32) zugeführten Signal (B) eine Phasenverschiebung von 90° gegenüber dem Sensorsignal (A) erteilt und daß das Erregungssignal (E) phasengleich mit dem Ausgangssignal (D) der Oszillatorschaltung (34, 35) ist.

3. Corioliskraft-Massendurchflußmesser nach Anspruch 1, dadurch gekennzeichnet, daß die Phasenschieberschaltung (37) dem Ausgangssignal (D) der Oszillatorschaltung (34, 35) eine Phasenverschiebung von 90° erteilt und daß das Erregungssignal (E) phasengleich mit dem Ausgangssignal der Phasenschieberschaltung (37) ist.

4. Corioliskraft-Massendurchflußmesser nach Anspruch 3, dadurch gekennzeichnet, daß der Phasenschieber (37) als Integrator ausgebildet und dem Phasenregelkreis (31) nachgeschaltet ist.

5. Corioliskraft-Massendurchflußmesser nach einem der vorhergehenden Ansprüche, dadurch gekennzeichnet, daß die Oszillatorschaltung einen spannungsgesteuerten Oszillator (34) und einen dem Oszillator (34) nachgeschalteten Frequenzteiler (35) enthält.

6. Corioliskraft-Massendurchflußmesser nach Anspruch 5, dadurch gekennzeichnet, daß der Phasenregelkreis (31) einen zwischen den Ausgang des Phasenkomparators (32) und den Steuereingang des spannungsgesteuerten Oszillators (34) eingefügten Tiefpaß (33) enthält.

7. Corioliskraft-Massendurchflußmesser nach einem der vorhergehenden Ansprüche, dadurch gekennzeichnet, daß jeder Schwingungssensor (25) so angeordnet und ausgebildet ist, daß die Amplitude des Sensorsignals (A) von der Schwingungsamplitude des mechanischen Schwingsystems (11, 12) abhängt, und daß eine Verstärkungsregelschaltung (39) vorgesehen ist, der die Amplitude des Erregungssignals (E) so regelt, daß die Amplitude des Sensorsignals (A) auf einem vorgegebenen konstanten Wert gehalten wird.

8. Corioliskraft-Massendurchflußmesser nach einem der vorhergehenden Ansprüche, dadurch gekennzeichnet, daß der Schwingungserreger (20) ein elektromagnetischer Wandler mit einer die mechanischen Schwingungen erzeugenden Magnetspule (23) ist und daß das elektrische Erregungssignal (E) ein Wechselstrom ist.

9. Corioliskraft-Massendurchflußmesser nach einem der vorhergehenden Ansprüche, dadurch gekennzeichnet, daß das mechanische Schwingsystem zwei parallele gerade Meßrohre (11, 12) aufweist, die durch den Schwingungserreger (20) in Betrieb in gegensinnige Biegeschwingungen versetzt werden.

10. Corioliskraft-Massendurchflußmesser nach einem der vorhergehenden Ansprüche, dadurch gekennzeichnet, daß die Lichtleitereinrichtung (253) zwei Saphirstäbe (254, 255) aufweist, von denen der eine Saphirstab (254) am einen Ende mit dem Lichtsender (251) und der andere Saphirstab (255) am einen Ende mit dem Lichtempfänger (252) verbunden ist, daß die anderen Enden der beiden Saphirstäbe (254, 255) als totalreflektierende Prismen ausgebildet sind und im Abstand voneinander derart gegenüberliegen, daß der vom Lichtsender (251) durch den einen Saphirstab (254) gehende Lichtstrom in den anderen Saphirstab (255) übertritt und von diesem zum Lichtempfänger (252) geleitet wird, und daß an dem mechanischen Schwingsystem wenigstens eine Tauchfahne (260, 261) so angebracht ist, daß sie in Abhängigkeit von der Auslenkung des Schwingsystems (11, 12) mehr oder weniger weit in den zwischen den prismenförmig ausgebildeten Enden der Saphirstäbe (254, 255) gebildeten Spalt (259) ragt, wodurch der Lichtstrom moduliert wird.

**Revendications**

1. Appareil de mesure du débit par les forces de Coriolis (10) comprenant:

– un système de vibration mécanique (11, 12) dams lequel s'écoule le fluide à mesurer qui est constitué par au moins un tube de mesure rectiligne (11, 12) au milieu duquel un excitateur électro-mécanique de vibrations (20) est disposé, ce dernier engendrant lors d'une excitation par un signal d'excitation (E) un effort moteur qui met respectivement chacun des tubes de mesure (11, 12) en vibration de flexion dont la phase est en concordance de phase avec le signal d'excitation,

– deux détecteurs de vibrations (24, 25) disposés de part et d'autre et à égale distance de l'excitateur de vibrations (20) pour transformer les vibrations mécaniques de chacun des tubes de mesure respectifs en signaux électriques de détection,

– un circuit d'évaluation (26) relié aux détecteurs de vibrations (24, 25) pour produire un signal correspondant au débit, à partir de la différence de phase des signaux de sortie des détecteurs de vibrations (24, 25), et

– un circuit excitateur (30) qui reçoit le signal de détection (A) de l'un des détecteurs de vibrations (25) et délivre le signal d'excitation (E), caractérisé en ce que:

— chaque détecteur de vibrations (25) est un détecteur de déplacement comportant un émetteur de lumière (251), un récepteur de lumière (252) ainsi qu'un dispositif conducteur de lumière (253) menant la lumière de l'émetteur (251) vers le récepteur (252), dispositif qui est construit de telle façon que le flux lumineux transmis est sensible au déplacement du système de vibration mécanique, la phase du signal de détection (A) concordant avec la phase de la flexion du système de vibration mécanique (11, 12),
— le circuit excitateur (30) comporte un circuit de réglage de phase (31) avec un comparateur de phase (32) et un circuit oscillateur (34, 35) pilotable en fréquence et en phase par le signal de sortie du comparateur de phase (32) et un circuit de déphasage (37) qui impose un déphasage de 90° entre le signal de détection (A) reçu à l'entrée du circuit d'excitation (30) et le signal d'excitation (E) délivré à la sortie du circuit d'excitation (30),
— ledit comparateur de phase (32) reçoit sur sa première entrée un signal (B) en relation de phase définie par rapport au signal de détection (A) et sur sa deuxième entrée le signal de sortie (D) du circuit oscillateur (34, 35)
— le circuit de réglage de phase (31) impose une synchronisation à verrouillage de phase entre les deux signaux d'entrée du comparateur de phase (32),
— et le signal d'excitation (E) est dérivé du signal de sortie (D) du circuit oscillateur (34, 35).

2. Appareil conforme à la revendication 1, caractérisé en ce que le circuit de déphasage (37) fait subir au signal (B) amené à la première entrée du comparateur de phase (32) un déphasage de 90° par rapport au signal de détection (A) et en ce que le signal d'excitation (E) est en phase avec le signal de sortie (D) du circuit oscillateur (34, 35).

3. Appareil conforme à la revendication 1, caractérisé en ce que le circuit de déphasage (37) fait subir au signal de sortie (D) du circuit oscillant (34, 35) un déphasage de 90° et en ce que le signal d'excitation (E) est en phase avec le signal de sortie du circuit de déphasage (37).

4. Appareil conforme à la revendication 3, caractérisé en ce que le circuit de déphasage (37) est constitué par un intégrateur et est placé en aval du circuit de réglage de la phase (31)

5. Appareil conforme à l'une quelconque des revendications qui précèdent, caractérisé en ce que le circuit oscillateur comporte un oscillateur (34) commandé en tension et un diviseur de fréquence (35) placé en aval de l'oscillateur (34).

6. Appareil conforme à la revendication 5, caractérisé en ce que le circuit de réglage de phase (31) contient un filtre passe-bas (33) interposé entre la sortie du comparateur de phase (32) et l'entrée de commande de l'oscillateur (34) commandé en tension.

7. Appareil conforme à l'une quelconque des revendications qui précèdent, caractérisé en ce que chaque détecteur de vibrations (25) est disposé et constitué de telle manière que l'amplitude du signal de détection (A) dépend de l'amplitude de vibration du système de vibration mécanique (11, 12), et en ce qu'il est prévu un circuit de réglage de l'amplification (39) qui règle l'amplitude du signal d'excitation (E) de telle façon que l'amplitude du signal de détection (A) est maintenue à une valeur constante prédéterminée.

8. Appareil conforme à l'une quelconque des revendications qui précèdent, caractérisé en ce que l'excitateur de vibrations (20) est un transformateur électromagnétique comportant un électro-aimant (23) engendrant les vibrations mécaniques et en ce que le signal électrique d'excitation (E) est un courant alternatif.

9. Appareil conforme à l'une quelconque des revendications qui précèdent, caractérisé en ce que le système de vibration mécanique comprend deux tubes de mesure (11, 12) parallèles et rectilignes qui sont mis en fonctionnement en mouvement de flexion opposés par l'excitateur de vibrations (20).

10. Appareil conforme à l'une quelconque des revendications qui précèdent, caractérisé en ce que le dispositif conducteur de la lumière (253) est constitué par deux barreaux de saphir (254, 255) dont l'un (254) est relié par l'une de ses extrémités avec l'émetteur de lumière (251) et dont l'autre (255) est relié par l'une de ses extrémités avec le récepteur de lumière (252), en ce que les deux autres extrémités des deux barreaux de saphir (254, 255) sont taillées en forme de prismes à réflexion totale et sont disposées face-à-face et écartées l'une de l'autre de telle façon que le flux lumineux émis par l'émetteur (251) à travers l'un des barreaux de saphir (254) pénètre dans l'autre barreau de saphir (255) et est ainsi conduit jusqu'au récepteur de lumière (252) et en ce qu'au moins un écran plongeur (260, 261) est rendu solidaire du système de vibration mécanique de telle manière qu'il pénètre plus ou moins dans l'espace (259) formé entre les extrémités taillées en forme de prismes des barreaux de saphir (254, 255), du fait des déplacements du système vibrant (11, 12), grâce à quoi le flux lumineux est modulé.

**Claims**

1. A Coriolis force mass flow meter comprising:
— a mechanical oscillating system (11, 12) through which the measured medium flows and which is formed by at least one straight measuring tube (11, 12) in the centre of which an electromagnetic oscillation exciter (20) is arranged, the latter generating upon excitation by an excitation signal (E) a drive force which sets the or each measuring tube (11, 12) into flexural oscillations the phase position of which coincides with the phase position of the excitation signal,
— two oscillation sensors (24, 25) arranged on either side of the oscillation exciter (20) at the same distance therefrom and converting the mechanical oscillations of the or each measuring tube into electrical sensor signals,
— an evaluating circuit (26) connected to the oscillation sensors (24, 25) for generating a measuring signal corresponding to the mass flow from the phase difference of the output signals of the oscillation sensors (24, 25), and

– an excitation circuit (30) which receives the sensor signal (A) of one of the oscillation sensors (25) and emits the excitation signal (E), characterized by the following features:

– each oscillation sensor (25) is a displacement sensor which comprises a light transmitter (251), a light receiver (252) and a light waveguide means (253) which transmits the light of the light transmitter (251) to the light receiver (252) and is so constructed that the transmitted light flux can be influenced by the deflection of the mechanical oscillating system, such that the phase position of the sensor signal (A) coincides with the phase position of the deflection of the mechanical oscillating system (11, 12),

– the excitation circuit (30) includes a phase control circuit (31) having a phase comparator (32) and an oscillator circuit (34, 35) frequency-controllable and phasecontrollable by the output signal of the phase comparator (32), and a phase shift circuit (37) which produces a phase shift of 90° between the sensor signal (A) received at the input of the excitation circuit (30) and the excitation signal (E) emitted at the output of the excitation circuit (30),

– the phase comparator (32) receives at the first input a signal (B) in defined phase relationship to the sensor signal (A) and at the second input the output signal (D) of the oscillator circuit (34, 35),

– the phase control circuit (31) compels a phase-rigid synchronization between the two input signals of the phase comparator (32),

– the excitation signal (E) is derived from the output signal (D) of the oscillator circuit (34, 35).

2. Coriolis force mass flow meter according to claim 1, characterized in that the phase shift circuit (37) imparts to the signal (B) supplied to the first input of the phase comparator (32) a phase shift of 90° with respect to the sensor signal (A) and that the excitation signal (E) is equiphase with the output signal (D) of the oscillator circuit (34; 35).

3. Coriolis force mass flow meter according to claim 1, characterized in that the phase shift circuit (37) imparts to the output signal (D) of the oscillator circuit (34, 35) a phase shift of 90° and that the excitation signal (E) is equiphase with the output signal of the phase shift circuit (37).

4. Coriolis force mass flow meter according to claim 3, characterized in that the phase shifter (37) is constructed as integrator and follows the phase control circuit (31).

5. Coriolis force mass flow meter according to any one of the preceding claims, characterized in that the oscillator circuit includes a voltage controlled oscillator (34) and a frequency divider (35) following the oscillator (34).

6. Coriolis force mass flow meter according to claim 5, characterized in that the phase control circuit (31) includes a low-pass filter (33) inserted between the output of the phase comparator (32) and the control input of the voltage controlled oscillator (34).

7. Coriolis force mass flow meter according to any one of the preceding claims, characterized in that each oscillation sensor (25) is so arranged and constructed that the amplitude of the sensor signal (A) depends on the oscillation amplitude of the mechanical oscillating system (11, 12) and that a gain control circuit (39) is provided which regulates the amplitude of the excitation signal (E) in such a manner that the amplitude of the sensor signal (A) is kept at a predetermined constant value.

8. Coriolis force mass flow meter according to any one of the preceding claims, characterized in that the oscillation exciter (20) is an electromagnetic transducer having a magnetic coil (23) generating the mechanical oscillations and that the electrical excitation signal (E) is an alternating current.

9. Coriolis force mass flow meter according to any one of the preceding claims, characterized in that the mechanical oscillating system comprises two parallel straight measuring tubes (11, 12) which are set in operation in opposite flexural oscillations by the oscillation exciter (20).

10. Coriolis force mass flow meter according to any one of the preceding claims, characterized in that the light waveguide means (253) comprises two sapphire rods (254, 255) of which the one sapphire rod (254) is connected at the one end to the light transmitter (251) and the other sapphire rod (255) is connected at the one end to the light receiver (252), that the other ends of the two sapphire rods (254, 255) are constructed as totally reflecting prisms and lie spaced apart opposite each other in such a manner that the light flux passing from the light transmitter (251) through the one sapphire rod (254) enters the other sapphire rod (255) and is conducted by the latter to the light receiver (252), and that to the mechanical oscillating system at least one immersion tab (260, 261) is attached in such a manner that in dependence upon the deflection of the oscillating system (11, 12) said tab projects to a greater or lesser extent into the gap (259) formed between the prism-like ends of the sapphire rods (254, 255), whereby the light flux is modulated.

# FIG.1

26 — Auswerteschaltung

10

11  21

15  13  24  20

15  14  15

23

22  25

12  22  30

Erregungsschaltung

# FIG.2

A

$f_R$  f

A

B

0°

−90°

−180°

$f_R$  f

# FIG . 3

# FIG . 4

# FIG.5

251  25  253  254  256
259
258
252  255  257

# FIG.6

11
256  259  260  257
25
254  255
262  261
12